Europäisches Patentamt

European Patent Office

Office européen des brevets

(19)

(11) **EP 1 239 280 A2**

(12) **EUROPEAN PATENT APPLICATION**

(43) Date of publication:
**11.09.2002 Bulletin 2002/37**

(51) Int Cl.[7]: **G01N 30/02**

(21) Application number: **02250906.1**

(22) Date of filing: **11.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **26.02.2001 US 271598**

(71) Applicant: **Pfizer Products Inc.**
**Groton, CT 06340-5146 (US)**

(72) Inventors:
 • **Lombardo, Franco,**
 **Pfizer Global Res. & Development**
 **Groton, Connecticut 06340 (US)**
 • **Shalaeva, Marina Y.**
 **Pfizer Global Res.& Developm.**
 **Groton, Connecticut 06340 (US)**
 • **Tupper, Karl A.,**
 **Pfizer Global Res. & Development**
 **Groton, Connecticut 06340 (US)**

(74) Representative: **Ruddock, Keith Stephen et al**
 **Pfizer Limited,**
 **UK Patent Department,**
 **Ramsgate Road**
 **Sandwich, Kent CT13 9NJ (GB)**

(54) **ElogDoct:A tool for lipophilicity determination in drug discovery basic and neutral compounds**

(57)    A RP-HPLC method for the determination of ElogD$_{oct}$ values for chemical compounds from retention time of each sample of the compound using (EQ1) drop in equation. This method has been shown to be effective on a set of 90 molecules.

## FIG. 1

EP 1 239 280 A2

**Description**

**Field of the Invention**

This invention is related to an improved method for determination of ElogD$_{oct}$ values for drug candidates.

**Background of the Invention**

The importance of lipophilicity can be understood, for example, by considering the correlation between high lipophilicity and poor solubility, which has generally been explored with neutral solutes.[1] Furthermore, lipophilicity has been shown to be of paramount importance in several other Absorption, Distribution, Metabolism, Excretion (ADME) aspects, that is, absorption, distribution, metabolism and excretion. It is generally held that very lipophilic compounds are "preferred" targets for metabolism, often leading to high clearance values and, quite often, lipophilicity positively correlates with a high plasma protein binding.[2-5] A large volume of distribution, probably due to a high fraction of the compound bound to tissues, is often observed for lipophilic compounds.[4] At physiological pH many basic or acidic drugs are ionized, and the partition coefficient is indeed a distribution coefficient, D, which is generally taken to be the distribution between an aqueous buffer at pH 7.4 and *n*-octanol, and it is indicated by the notation $D_{oct}^{7.4}$.

Scherrer[3] defines the distribution coefficient (in the form of its logarithm) for monoprotic bases as:

$$\log D_{oct} = \log P_{oct} + \log [1 /(1 + 10^{\,pKa - pH})]$$

For monoprotic acids the equation has the same form, except that the exponent is written as pH-pKa. For polyprotic compounds the equations become more complicated, and these aspects have been described in detail by Avdeef.[6]

Given the widespread use and application of distribution coefficients, a method that can accurately and rapidly yield log $D_{oct}^{7.4}$ values, would be a welcome addition to the experimental tools available for physicochemical properties screening in the discovery setting. The general notation logD$_{oct}$, is defined herein, to mean the values determined at pH 7.4.

Although computational packages for the estimation of logD$_{oct}$ are available,[7] or this value could also be calculated from estimated logP$_{oct}$ and pKa values, we find that, for drug molecules, computed values are often inaccurate. Depending on the software used, they may differ by as much as two to three logD$_{oct}$ units, among different software packages and/or from experimental values, since the accuracy of pKa as well as logP$_{oct}$ has to be factored in. These methods are, of course, valuable when virtual libraries (or individual virtual molecules) are being designed and, with proper training, more accurate values might be obtained. However, as early as possible, and especially if a compound-sparing method is available, the computed values should be replaced by measured values, with particular regards to cases where intramolecular H-bonding is possible, and/or in the presence of conformational flexibility, and/or with molecules which can tautomerize. These occurrences typically offer an even greater challenge to fragment-based software packages. Structure Activity Relationships (SAR) and Structure Property Relationships (SPR) analyses and alerts such as the Lipinski "rule of 5",[8] would greatly benefit by the introduction of accurate experimental values.

The classical shake-flask method, or variations of this method which have been described,[9] are neither rugged nor rapid enough for medium to high-throughput applications, they are generally more sensitive to impurities, less amenable to automation than are RP-HPLC methods, and they do not usually offer a wide dynamic range.

RP-HPLC retention data, expressed either as log *k'* or log $k'_w$, have been shown to correlate well with absolute and relative lipophilicity values[10] but, they have also been criticized as not being a true "replacement" for shake-flask values.[9] Part of the criticism may stem from the limited scope of some reports, focusing either on fairly simple monofunctional solutes,[11-12] or classes of analogs[13] with a limited logP$_{oct}$ range, and in many cases there was only mention of neutral solutes, under the pH conditions of the method. When these correlations were extended beyond classes of analogs, less encouraging results were obtained.[10] Furthermore, in several cases, the slope of these correlations was quite different from unity, casting doubts about the different balance of forces responsible for the two values. Indeed, LFER (Linear Free Energy Relationships) analyses[14] have shown that log *k'* on typical RP-HPLC systems do not encode the same blend of factors, as does logP$_{oct}$. In particular, log *k'* values respond to solute hydrogen-bond acidity, but logP$_{oct}$ values do not.

*k'* represents the capacity factor of the solute at a given organic solvent concentration, and $k'_w$ is the capacity factor extrapolated to a 0% concentration of the organic solvent. The observations reported above pointed us toward using the extrapolated value rather than, as reported by Yamagami and co-workers,[15] a log *k'* value, which is likely to be limited in its applicability to a wide variety of drug-like compounds (amphiprotic) and, therefore, of limited use for the goals we set. As we reported previously[16], a judicious choice of columns and mobile phase, as well as flow rates, would greatly enhance the performance of RP-HPLC methods.

Another factor of great importance, if the data were to be used for software training purposes, or for the creation of a large database, is the reproducibility from column to column, which depends on the quality of the packing chemistry and manufacturing. We have shown, in the case of the ElogP data,[16] that the latter aspect does not appear to be a problem. However, it is advisable to monitor the column performance for possible deterioration, especially if high-throughput screening is the goal.

The speed of the determination and the ability to handle diverse structures and lipophilicity values are, of course, of paramount importance in an industrial research setting. These aspects translate into the capability of screening, with modest resources, a large number of compounds, with a good degree of accuracy across a wide range of lipophilicity values and hydrogen-bonding properties.

## Summary of the Invention

This invention provides a method that is accurate, rapid, and possesses a good dynamic range, together with being applicable to a variety of drug-like molecules, and which is robust with respect to ion-pairing and concentration-related variability.

Although most of the determination of $LogD_{oct}$ disclosed herein were conducted at pH 7.4, other buffers with pH values ranging from pH 4 to 8 may be employed advantageously at pH values to mimic the physiological values in different parts of the body where different drugs are functional or absorbed in the blood stream.

This invention provides a method of experimentally determining $ElogD_{oct}$ for chemical compounds ("$ElogD_{oct}$" is the notation herein for "experimentally determined" $logD_{oct}$, with "$logD_{oct}$", unless otherwise indicated, referring to the classical or literature value) which comprises:

(a) Introducing said chemical compounds seriatim to the column of a reverse phase high performance liquid chromatograph; said column being an embedded amide functional group column; or a C-18 bonded column with low silanol activity; and
(b) Eluting said compounds with a mobile phase containing Morpholine Propane Sulfonic (MOPS) buffer and a methanol/octanol mixture in which the proportions of said methanol/octanol mixture to said buffer are from 75 to 15% v/v; and with flow rates between 0.5 and 3 ml/min and
(c) Measuring the retention time required to elute each sample from said column; and
(d) Calculating $ElogD_{oct}$ from the retention time of each sample using equation 1 (the derivation of which will be discussed).

$$logD_{oct} = 1.1245 \ (\pm \ 0.0233) \ log \ k_w^{'} + 0.2121 \ (\pm \ 0.0429) \qquad \text{(Eq.1)}$$

This invention further provides a method wherein said compounds for which $ElogD_{oct}$ is to be determined are divided into groups according to calculated lipophilicity based on chemical structure and; $ElogD_{oct}$ is determined for all samples in a first group and; said column is equilibrated to the conditions for a second group.

This invention further provides a method wherein said $logD_{oct}$ values are calculated by a programmed computer and samples within a defined $logD_{oct}$ range are introduced seriatim into said column by robotic means under control of a programmed computer and calculating and recording each $ElogD_{oct}$ from the retention time of each sample by equation 1.

This invention further provides a method wherein each of steps a) through d) is performed by robotic means under the control of a programmed computer.

This invention further provides a method wherein said column is an embedded amide functional group column.

This invention further provides a method wherein said column is a C-18 bonded column with low silanol activity.

This invention further provides a method wherein $logD_{oct}$ may be determined at a buffer pH of 4 to 8 and preferably at 6.5.

These and other features and advantages of the present invention will become more evident from the following discussion and drawings wherein:

## Short Description of the Drawings

Figure 1. is a correlation between $logD_{oct}$ and log $k'_w$ for 90 solutes; and

Figure 2 is a plot of residuals vs. $logD_{oct}$

## Detailed Description of the Invention, Preferred Embodiment and Drawings

For a subset of the compounds, including basic and neutral compounds, *n*-decylamine yields improved correlations, although it was not necessary for the neutral solutes.[16] In order to maximize the speed of analysis, while still retaining a good accuracy, the same flow rate previously reported[16] was chosen for each range of lipophilicity. We also studied the effect of a further increase of flow rate on accuracy, and performed statistical analysis in order to determine experimental lipophilicity "thresholds" for each range of conditions, which would yield accurate results.

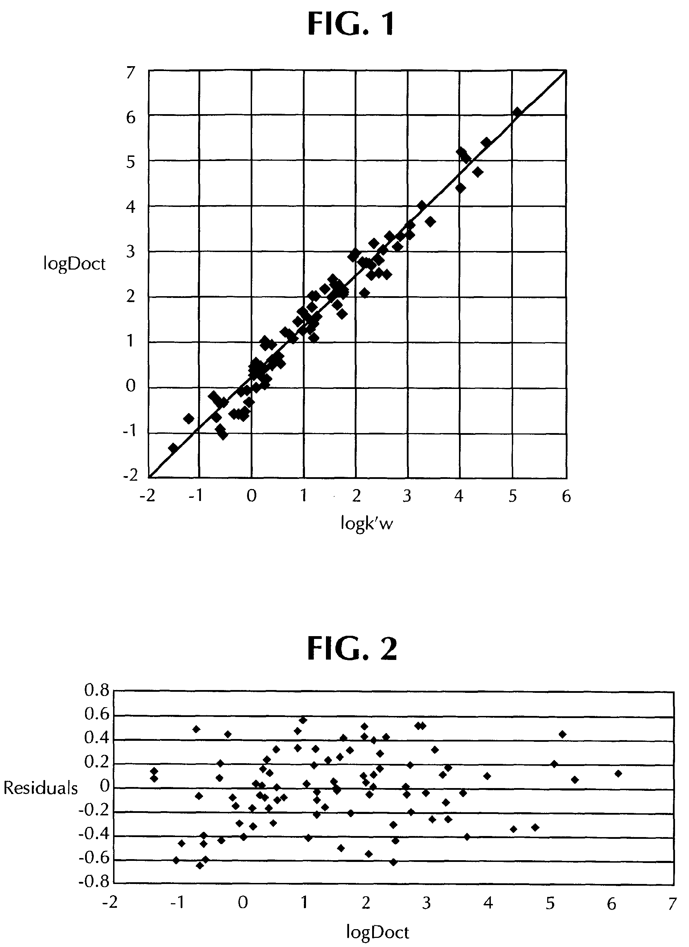

Extensive work was conducted using the 90 solutes reported in Table 1, and each log $k'_w$ value is the average of at least three determinations, on different columns, with an average standard deviation of 0.07. The table also reports the standard deviation of log $k'_w$ for each compound (N =3 to 5) and no large deviations were observed, regardless of structure and range of lipophilicity, with methotrimeprazine yielding the largest s.d. of 0.27. It is worth noting that routine potentiometric lipophilicity determinations have a typical s.d. of 0.4 $logD_{oct}$ units, for replicate determinations, and often they have to be extrapolated to 0% organic solvent from mixed solvents, due to the poor aqueous solubility of many compounds. The fit of the log $k'_w$ to the averaged $logD_{oct}$ values is reported below (Eq.1), and shown graphically in Figure 1.

$$logD_{oct} = 1.1245\ (\pm\ 0.0233)\ \log k'_w + 0.2121\ (\pm\ 0.0429) \qquad \text{(Eq.1)}$$

N = 90, $R^2$ = 0.964, R = 0.982, s = 0.309, F = 2337, $q^2$ = 0.962 (these values are standards related to statistical confirmation of the derived values, with N being the number of compounds, R being the correlation coefficient ($R^2$ is the square thereof), s being the standard deviation, F being the Fisher statistic and $q^2$ being calculation deviation with sequential calculation repetitions with omission of one compound).

The slope obtained is very close to unity, with a small intercept, and these parameters offer a good comparison of the balance of forces which play a role in the shake-flask vs. RP-HPLC distribution coefficient. The question of the diagnostic importance of the slope has been stressed by Minick et al.[17] Pointing to the work of Melander et al.,[20] these authors state that "...equations correlating log $k'_w$ and $logP_{oct}$ data represent linear free energy relationships in which the slope is an estimate of how closely the free energies of the processes compare." A slope close to unity implies that the two processes are homoenergetic, i.e. the free energy changes are the same. Furthermore, if the goal is the determination of the "classical" $logD_{oct}$, then a slope significantly different from one would enhance any error in the determination of or $logD_{oct}$. And a slope significantly different from unity is an indication of a fairly large over- or underestimation of lipophilicity by the method. Obviously, if a different scale of lipophilicity is the goal, log $k'_w$ values could be used as such, or different indices could be developed. Valkó et al.,[21] described a chromatographic hydrophobicity index (CHI), obtained via a gradient run. In this case a correlation with a "classical" shake flask $logP_{oct}$ was not necessarily sought, and a self-consistent CHI scale was established. However, $logD_{oct}$ data are so widely used in many correlations by the medicinal chemistry community, that a "classical" $logD_{oct}$ value is likely to be desired. To the best of our knowledge no other method, capable of encompassing all the accuracy and ruggedness requirements we set as goals for this work, including a very practical set of conditions and speed, has been reported in the literature to date. By analogy with our previous work[16] we termed the values obtained via Eq. 1 as $ElogD_{oct}$, and we will refer to them as such hereinafter.

A plot of residuals vs. $logD_{oct}$ values, as in Figure 2, shows that the error distribution is very consistent across the entire range, and no curvature (larger error) is observed at extreme values. This is important because it shows that similarly accurate determinations can be obtained across a dynamic range of 7 $logD_{oct}$ units, and the standard error is fairly small, considering also the variability of some of the $logD_{oct}$ data reported in the literature.

The question might be asked, about whether or not decylamine acts as a modifier other than a masking agent for potentially ionized silanols, since its absence is detrimental to the performance of the method. A comparison between log $k'_w$ values obtained under the conditions reported in our previous work 36 neutral solutes,[16] termed here log $k'_w$ (P), and the values obtained under the present condition for the same solutes, i.e. log $k'_w$ (D), shows that the balance of forces is the same, as demonstrated by a very small intercept (non-significant) and a slope very close to unity, in Equation 2. Since we have demonstrated that log $k'_w$ under our previous conditions encodes the same balance of forces as in a biphasic octanol-water system,[16] we conclude that the values obtained by this method are "true" $logD_{oct}$ values.

$$\log k'_w\ (P) = 1.0429\ (\pm\ 0.0241)\ \log k'_w\ (D) - 0.0219\ (\pm\ 0.0522) \qquad \text{(Eq.2)}$$

$$N = 36, R^2 = 0.982, R = 0.991, s = 0.198, F = 1866, q^2 = 0.980$$

We have also tested a set of 10 proprietary compounds, basic and neutral, with molecular weights between 209 and 532 dalton. These compounds are structurally dissimilar from the compounds in the training set, and possess a wide range of functional groups. The results of the ElogD determinations are compared, in Table 2, with shake-vial and/or potentiometric determinations, and they show a good performance of the method for compounds 1-10.

As in our previous method,[16] we used control charts, as measure for a day-to-day system suitability check, which were constructed for ten compounds chosen across the entire range, and which are indicated in Table 1 (see Statistical Analysis section). An unexpected variation in these plots would immediately "flag" questionable results. Furthermore, we find that triflupromazine (CAS no. 146-54-3) offers a very sensitive "probe" for the column performance monitoring, as well as its analog chlorpromazine (CAS no. 50-53-3). A decline in the log $k'_w$ value of either of these two compounds is a good indication of column deterioration. A log $k'_w$ value for triflupromazine below 2.7 (2.6 for chlorpromazine) would indicate that the column should be replaced.

Currently, the ElogD determinations are run with the aqueous portion of the mobile phase prepared by a commercial laboratory, according to our specifications, and in fairly large batches (> 20 gallons), and we have noticed no significant difference in performance, after an initial adjustment of pH as needed. This practical enhancement helps with the speed of analysis, and it may also be taken as an indication of the ruggedness of the method.

As a further improvement, in terms of speed of analysis, we have also attempted to increase the flow rate and we have further automated the calculation procedure, through in-house software, to obtain the final $ElogD_{oct}$ value, with very limited manual intervention, directly from the chromatographic data file. These modifications allow for an enhanced throughput, starting with an already rapid procedure. $ElogD_{oct}$ data for any compound are obtained, on average, in $\leq 20$ minutes, on a single instrument. Equation 3 shows a high correlation between the log $k'_w$ values obtained with the "standard" flow rate (sf, 1.0 mL/min) and the faster flow rates (ff, 1.5 mL/min), used for a "mixed" set of data comprising 56 proprietary and commercial compounds, using the same compounds under each condition, and encompassing roughly 3 log $k'_w$ units, largely across the medium range defined in the Experimental section. We have run over 2,000 compounds with the "standard" flow rates.

$$\log k'_w \text{ (sf)} = 0.8823 \,(\pm 0.0378) \log k'_w \text{ (ff)} + 0.1474 \,(\pm 0.0654) \qquad \text{(Eq.3)}$$

("sf" is standard flow at 1 ml/minute and "ff" is fast flow at 1.5 ml/minute)

$$N = 56, R^2 = 0.910, R = 0.954, s = 0.175, F = 544, q^2 = 0.9$$

Similarly, we have obtained good results by increasing the flow rate of the high lipophilicity range, from 2 to 3 mL/min (data not shown).

As a further caveat with the use of shake-methods we would like to report the widely different results we obtained with guanoxan (a guanidine derivative, CAS no. 5714-04-5) for which a value of - 0.83 was reported as $logD_{oct}$.[22] Using the shake-vial procedure B (see Experimental Section) values of - 0.1 and - 0.3 were obtained, in duplicate determinations. In a fairly extensive $logD_{oct}$ vs. concentration study, using the shake-vial procedure A, and we found that the values ranged from - 1.6 to - 1.0 upon decreasing the concentration, from 1.5 to 0.1 mg, in a 50:2 octanol:buffer system. Indeed Perlman[23] has reported a large variation in the $logD_{oct}$ values of diarylguanidines, up to 2 $logD_{oct}$, units depending upon the counterion present, and that might be the case here. Under our conditions we found an $ElogD_{oct}$ value of - 0.3, which is in very close agreement with the data from shake-flask procedure B but deviate significantly from the values from procedure A, even at the lowest concentration we have reached, and might be borderline acceptable for an estimation, against the literature data.

Most the solutes were purchased directly from commercial sources (Aldrich, Fluka, ICN, RBI, Sigma, Tocris) and used as received, in all cases. In several cases they were available as proprietary compounds or samples extracted from commercial formulations. Deionized water, HPLC grade methanol (J. P. Baker) and 1-octanol (Fisher Scientific) were used throughout.

The mobile phase consisted, in all cases, of 20 mM MOPS buffer at pH 7.4, with the addition of 0.15% of *n*-decylamine,[12,13] and methanol in varying proportions from 70 to 15% v/v. A 0.25% (v/v) amount of octanol was added to methanol, and octanol-saturated water was used to prepare the buffer. The mobile phase is now routinely prepared, by Brand-Nu Labs, Meriden, CT.

The capacity factors data ($k' = (t_R-t_0)/ t_0$), obtained at various amounts of methanol, were then extrapolated to 0% methanol and reported as log $k'_w$, using a linear procedure. In all cases, except for allopurinol ($R^2 = 0.96$), the

square of the correlation coefficient was ≥ 0.99. Injections of pure methanol were used to determine $t_0$, i.e. the dead time, while $t_R$ has the usual meaning of the retention time for the analyte. For very low $logD_{oct}$ compounds, atenolol (CAS no. 29122-68-7) was used to determine $t_0$, and is now used routinely for the low range.

All the chromatographic runs were performed on an Agilent 1100 HPLC ChemStation at the ambient temperature. The HPLC column used was Supelcosil LC-ABZ, 5 □m, 4.6 x 50 mm. A diode array detector was used to monitor signals at 235, 255, 265, 275 and 310 nm. We also tested columns manufactured from different silica bond lots, to ensure reproducibility. Samples were dissolved in 1:1 methanol/water in a concentration range of 50-100 □g/mL. The flow rate was 0.5, 1 or 2 mL/min, depending on the lipophilicity range. Three experimental lipophilicity ranges were established using, in all cases, three points for the extrapolation to $k'_w$, as described as follows:

| $ElogD_{oct}$ Range | Flow rate (mL/min) | % MeOH |
|---|---|---|
| <1 | 0.5 | 15, 20, 25 |
| 1-3 | 1 | 40, 45, 50 |
| > 3 | 2 | 60, 65, 70 |

The samples are placed in the appropriate range by estimating their lipophilicity via computed values, or by prior experience with a given class. Experimental values obtained from runs outside the appropriate range, are typically run *de novo,* but a "screen" using a single injection at 75% methanol can be performed, to "weed out" high lipophilicity compounds. If the retention time is > 1.1 minutes, at a flow rate of 2 mL/min, the compound would likely yield an $ElogD_{oct}$ > 5. The user may then decide to adjust the conditions for that compound, such as the duration of each run, or to use such an estimated value, thus increasing the throughput and guarding against potential carry-overs.

In each case the entire group of samples is run before the column is equilibrated to the next condition, in an automated fashion. We typically start from the high range (highest methanol content) and run, sequentially, all the compounds. For the low range it was found that a period of equilibration between 1.5 to 2 hours is needed. At the end of a complete run the column is flushed with acetonitrile, at 2.0 mL/min, for 10-20 minutes.

The data analysis is then performed via an automated procedure relying on in-house software, which yields the $ElogD_{oct}$ values directly from the chromatographic data files.

The shake-flask $logD_{oct}$ data, and in some cases data from countercurrent chromatography, were taken from the literature, after careful evaluation of the experimental method and temperature reported (generally between 20 and 25 °C) in the original references, or they were determined, except when data were not available or could not be determined experimentally due to the high lipophilicity of the compound. In such cases (clotrimazole and tolnaftate) a computed value was used. The shake-vial experimental measurements performed (Procedure A) were all conducted at least in duplicate, in amber glass vials and, in some cases, with varying ratios of octanol and MOPS buffer, always mutually pre-saturated prior to the experiment. The vials were shaken at least overnight. HPLC analysis at different wavelengths, after centrifugation and separation of the phases, was used for the quantitative analysis, and both phases were analyzed. In some cases compounds were used in a semi-automated $logD_{oct}$ shake-vial determination, using a phosphate buffer at pH 7.4 as the aqueous phase. In this case (Procedure B) a 1:1 ratio of n-octanol and buffer (both phases were mutually pre-saturated) was used, with an agitation time ≥ 30 minutes, followed by centrifugation and analysis of both phases.

In several instances, as indicated in Table 1, the data were obtained from pH-metric determinations.

### Statistical Analysis

All regression analyses were performed via the JMP statistical software package (v. 3.2.1, SAS Institute Inc.). Ten compounds were selected across the set of 90 compounds, covering the entire range of lipophilicity, to monitor the day-to-day performance of the method. Statistical calculations showed that the use of the 10 compounds would assure that the estimated slope, in the final regression equation, would be within ± 0.09 of true one. The JMP software was also used for the Quality Monitoring. Data accumulated for the standard set of compounds, and regularly plotted on the control charts, constitute a powerful method for the detection of trends and variations in performance. Variations in log $k'_w$ values, for the selected compounds, should not exceed ± 3 $k_s$, where $k_s$ is the standard deviation estimate based on data collected under well controlled experiments.[16] Triflupromazine log $k_w$ are plotted for every run, to ensure that the column is performing suitably.

Table 1.

| Retention time and logD$_{oct}$ data for the 90 solutes used. | | | | | | | |
|---|---|---|---|---|---|---|---|
| Compound[a] | CAS no. | log $k'_w$ [b] | s.d.[c] | ElogD$_{oct}$[d] | logD$_{oct}$[e] | Res.[f] | Refs. |
| Acebutolol | 37517-30-9 | -0.53 | 0.04 | -0.38 | -0.29 | 0.09 | 25,26 |
| Acetominophen* | 103-90-2 | 0.15 | 0.01 | 0.38 | 0.51 | 0.13 | 27 |
| Acetophenone | 98-86-2 | 1.21 | 0.03 | 1.57 | 1.58 | 0.01 | 28 |
| Allopurinol* | 315-30-0 | -0.27 | 0.01 | -0.09 | -0.55 | -0.46 | 29 |
| Alprazolam | 28981-97-7 | 1.73 | 0.04 | 2.16 | 2.12 | -0.04 | 30 |
| Alprenolol | 13655-52-2 | 0.37 | 0.04 | 0.63 | 0.97 | 0.34 | j,25 |
| Amiodarone* | 1951-25-3 | 5.10 | 0.21 | 5.95 | 6.10 | 0.15 | 31 |
| Amlodipine | 88150-42-9 | 1.72 | 0.05 | 2.15 | 1.66 | -0.49 | g,h,2,32 |
| Antipyrine | 60-80-0 | 0.12 | 0.03 | 0.35 | 0.38 | 0.03 | 33 |
| Atropine | 51-55-8 | -0.33 | 0.19 | -0.16 | -0.55 | -0.39 | j,34 |
| Bifonazole | 60628-96-8 | 4.33 | 0.07 | 5.08 | 4.77 | -0.31 | 35 |
| Bromazepam | 1812-30-2 | 1.04 | 0.04 | 1.38 | 1.65 | 0.27 | 36,37 |
| 3-Bromoquinoline | 5332-24-1 | 2.53 | 0.06 | 3.06 | 3.03 | -0.03 | 38 |
| Caffeine | 58-08-2 | -0.19 | 0.02 | 0.00 | -0.07 | -0.07 | 35 |
| Carbamazepine | 298-46-4 | 1.40 | 0.03 | 1.79 | 2.19 | 0.40 | 39 |
| Chloramphenicol* | 56-75-7 | 1.19 | 0.07 | 1.55 | 1.14 | -0.41 | 35 |
| 3-Chlorophenol | 108-43-0 | 2.58 | 0.01 | 3.11 | 2.50 | -0.61 | 28 |
| Chlorpheniramine | 132-22-9 | 1.20 | 0.16 | 1.56 | 1.41 | -0.15 | j,18,40 |
| Chlorpromazine | 50-53-3 | 2.66 | 0.08 | 3.20 | 3.38 | 0.18 | 18,26,41 |
| Chlorthalidone | 77-36-1 | 0.76 | 0.10 | 1.07 | 1.11 | 0.04 | g,j,42 |
| Cimetidine | 51481-61-9 | 0.17 | 0.03 | 0.40 | 0.35 | -0.05 | j |
| Clonidine | 4205-90-7 | 0.07 | 0.03 | 0.29 | 0.62 | 0.33 | 43 |
| Clotrimazole* | 23593-75-1 | 4.03 | 0.06 | 4.74 | 5.20 | 0.46 | 16 |
| Clozapine | 5786-21-0 | 2.82 | 0.03 | 3.38 | 3.13 | -0.25 | j,18 |
| Cocaine | 50-36-2 | 0.24 | 0.05 | 0.48 | 1.05 | 0.57 | 44 |
| Codeine | 76-57-3 | 0.16 | 0.13 | 0.39 | 0.23 | -0.16 | 41,45 |
| Cyclothiazide | 2259-96-3 | 2.15 | 0.09 | 2.63 | 2.09 | -0.54 | j |
| Deprenyl | 2323-36-6 | 2.19 | 0.11 | 2.67 | 2.70 | 0.03 | 31 |
| Desipramine | 50-47-5 | 0.97 | 0.06 | 1.30 | 1.28 | -0.02 | g,j,46 |
| Dexamethasone | 50-02-2 | 1.62 | 0.04 | 2.03 | 1.83 | -0.20 | 47 |
| Diazepam | 439-14-5 | 2.46 | 0.03 | 2.98 | 2.79 | -0.19 | 48 |
| 3,5-Dichlorophenol | 591-35-5 | 3.44 | 0.08 | 4.08 | 3.68 | -0.40 | 38 |
| Diethylstilbestrol | 56-53-1 | 4.12 | 0.10 | 4.85 | 5.07 | 0.22 | 35 |
| Diltiazem | 33286-22-5 | 1.59 | 0.22 | 2.00 | 2.06 | 0.06 | j |
| Diphenhydramine | 58-73-1 | 1.04 | 0.06 | 1.38 | 1.29 | -0.09 | g,j,40 |
| Disopyramide | 3737-09-5 | -1.21 | 0.10 | -1.15 | -0.66 | 0.49 | j |
| Estradiol | 50-28-2 | 3.28 | 0.08 | 3.90 | 4.01 | 0.11 | 35 |
| Fentanyl citrate | 990-73-8 | 1.94 | 0.09 | 2.39 | 2.91 | 0.52 | 49 |
| Flecainide | 54143-55-4 | 0.25 | 0.06 | 0.49 | 0.97 | 0.48 | g,50 |
| Fluconazole* | 86386-73-4 | 0.40 | 0.15 | 0.66 | 0.50 | -0.16 | 51 |
| Griseofulvin | 126-07-8 | 1.73 | 0.06 | 2.16 | 2.18 | 0.02 | 35 |
| Haloperidol | 52-86-8 | 2.00 | 0.05 | 2.46 | 2.98 | 0.52 | g,j |

a. Asterisk denotes standard compound.

b. Average of three to five determinations

c. Standard deviation of 3 to 5 log $k'_w$ determinations.

d. Equation 1.

e. Average logD$_{oct}$ from all the references or methods indicated.

f. logD$_{oct}$ - ElogD$_{oct}$. g. Shake-vial Procedure A. h. Shake-vial Procedure B. j. Potentiometric determination.

Table 1.   (continued)

| Retention time and $logD_{oct}$ data for the 90 solutes used. | | | | | | | |
|---|---|---|---|---|---|---|---|
| Compound[a] | CAS no. | log $k'_w$ [b] | s.d.[c] | $ElogD_{oct}$[d] | $logD_{oct}$[e] | Res.[f] | Refs. |
| Hydrocortisone | 50-23-7 | 1.14 | 0.06 | 1.49 | 1.55 | 0.06 | 49 |
| Hydrocortisone-21 acetate | 50-03-3 | 1.64 | 0.01 | 2.06 | 2.19 | 0.13 | 49 |
| Imipramine | 50-49-7 | 1.56 | 0.19 | 1.97 | 2.40 | 0.43 | g,j,18,40 |
| Lidocaine | 137-58-6 | 0.96 | 0.13 | 1.29 | 1.71 | 0.42 | g,18,41 |
| Loratadine | 79794-75-5 | 4.02 | 0.07 | 4.73 | 4.40 | -0.33 | 40 |
| Lorazepam | 846-49-1 | 2.30 | 0.03 | 2.80 | 2.51 | -0.29 | 52 |
| Lormetazepam | 848-75-9 | 2.27 | 0.04 | 2.76 | 2.72 | -0.04 | 53 |
| Methotrimeprazine | 60-99-1 | 2.10 | 0.27 | 2.57 | 2.77 | 0.20 | j |
| Methylthioinosine | 342-69-8 | 0.25 | 0.02 | 0.49 | 0.09 | -0.40 | 16 |
| Metoclopramide | 364-62-5 | 0.46 | 0.16 | 0.73 | 0.64 | -0.09 | j |
| Metoprolol | 56392-17-7 | -0.73 | 0.08 | -0.61 | -0.16 | 0.45 | 25,31,34 , 46 |
| Metronidazole | 443-48-1 | -0.08 | 0.02 | 0.12 | -0.02 | -0.14 | 54 |
| Mexiletine | 31828-71-4 | 0.02 | 0.03 | 0.23 | 0.47 | 0.24 | j |
| Morphine sulfate | 64-31-3 | 0.10 | 0.10 | 0.32 | 0.03 | -0.29 | 41,44,45 |
| Naphthalene | 91-20-3 | 3.03 | 0.06 | 3.62 | 3.37 | -0.25 | 38 |
| Nicotine | 54-11-5 | 0.02 | 0.06 | 0.23 | 0.40 | 0.17 | g,j |
| Nifedipine | 21829-25-4 | 2.34 | 0.06 | 2.84 | 3.17 | 0.33 | 16 |
| Nifuroxime* | 6236-05-1 | 1.14 | 0.07 | 1.49 | 1.28 | -0.21 | 16 |
| Nitrofurazone | 59-87-0 | 0.29 | 0.01 | 0.54 | 0.23 | -0.31 | 55 |
| Nizatidine | 76963-41-2 | -0.13 | 0.04 | 0.07 | -0.52 | -0.59 | 56 |
| Omeprazole | 73590-58-6 | 1.59 | 0.04 | 2.00 | 2.30 | 0.30 | g,57 |
| Pentoxifylline | 6493-05-6 | 0.03 | 0.02 | 0.25 | 0.29 | 0.04 | 58 |
| Pirenzepine | 28797-61-7 | -0.15 | 0.06 | 0.04 | -0.61 | -0.65 | g |
| Prednisolone | 50-24-8 | 1.24 | 0.05 | 1.61 | 1.60 | -0.01 | 16 |
| Prednisone | 53-03-2 | 0.90 | 0.06 | 1.22 | 1.46 | 0.24 | 35 |
| Procainamide | 51-06-9 | -0.69 | 0.24 | -0.56 | -0.62 | -0.06 | 59 |
| Propafenone | 54063-53-5 | 1.14 | 0.10 | 1.49 | 1.81 | 0.32 | g,j |
| Propranolol | 525-66-6 | 0.64 | 0.01 | 0.93 | 1.26 | 0.33 | g,25,26, 31,34, 46,60 |
| Quinidine | 56-54-2 | 1.16 | 0.12 | 1.52 | 2.04 | 0.52 | 18,26,61 |
| Quinoline | 91-22-5 | 1.52 | 0.04 | 1.92 | 2.03 | 0.11 | 62 |
| Ranitidine | 66357-35-5 | -0.63 | 0.01 | -0.50 | -0.29 | 0.21 | j |
| Risperidone | 106266-06-2 | 1.23 | 0.13 | 1.60 | 2.04 | 0.44 | g |
| Sotalol | 3930-20-9 | -1.47 | 0.10 | -1.44 | -1.35 | 0.09 | 25,31 |
| Sumatriptan | 103628-46-2 | -0.54 | 0.02 | -0.40 | -1.00 | -0.60 | g,h,63 |
| Terbutaline sulfate | 23031-32-5 | -1.51 | 0.06 | -1.49 | -1.35 | 0.14 | 31,46,64 |
| Testosterone | 58-22-0 | 2.63 | 0.04 | 3.17 | 3.29 | 0.12 | 47 |
| Tetracaine | 94-24-6 | 1.70 | 0.07 | 2.12 | 2.29 | 0.17 | 31 |
| Thiamphenicol | 15318-45-3 | -0.05 | 0.01 | 0.16 | -0.27 | -0.43 | 65 |
| Thioridazine | 50-52-2 | 2.88 | 0.10 | 3.45 | 3.34 | -0.11 | j,66 |

a. Asterisk denotes standard compound.

b. Average of three to five determinations

c. Standard deviation of 3 to 5 log $k$   determinations.

d. Equation 1.

e. Average $logD_{oct}$ from all the references or methods indicated.

f. $logD_{oct}$ - $ElogD_{oct}$. g. Shake-vial Procedure A. h. Shake-vial Procedure B. j. Potentiometric determination.

Table 1.   (continued)

| Compound[a] | CAS no. | log $k'_w$ [b] | s.d.[c] | ElogD$_{oct}$[d] | logD$_{oct}$[e] | Res.[f] | Refs. |
|---|---|---|---|---|---|---|---|
| Retention time and logD$_{oct}$ data for the 90 solutes used. |
| Tiapride | 51012-32-9 | -0.58 | 0.05 | -0.44 | -0.90 | -0.46 | j |
| Tiotidine | 69014-14-8 | 0.57 | 0.01 | 0.85 | 0.57 | -0.28 | g |
| Tolnaftate* | 2398-96-1 | 4.53 | 0.10 | 5.31 | 5.40 | 0.09 | 16 |
| Trazodone | 19794-93-5 | 2.45 | 0.06 | 2.97 | 2.54 | -0.43 | j |
| Triamterene | 396-01-0 | 0.71 | 0.05 | 1.01 | 1.21 | 0.20 | g,j,42,67 |
| Trichlormethiazide | 133-67-5 | 0.26 | 0.02 | 0.50 | 0.43 | -0.07 | g,j |
| Triflupromazine* | 146-54-3 | 3.05 | 0.13 | 3.64 | 3.61 | -0.03 | j,66 |
| Trimethoprim | 738-70-5 | 0.36 | 0.02 | 0.62 | 0.63 | 0.01 | j |
| Zaltidine | 85604-00-8 | 0.53 | 0.02 | 0.81 | 0.74 | -0.07 | g |

a. Asterisk denotes standard compound.

b. Average of three to five determinations

c. Standard deviation of 3 to 5 log $k'_w$ determinations.

d. Equation 1.

e. Average logD$_{oct}$ from all the references or methods indicated.

f. logD$_{oct}$ - ElogD$_{oct}$. g. Shake-vial Procedure A. h. Shake-vial Procedure B. j. Potentiometric determination.

Table 2.

| Compound | log $k'_w$[a] | s.d.[b] | ElogD$_{oct}$[c] | logD$_{oct}$[d] | Residuals[e] |
|---|---|---|---|---|---|
| Retention time and logD$_{oct}$ data for the 10 proprietary compounds in the test set. |
| **1** | 0.15 | 0.07 | 0.38 | 0.31 | -0.07 |
| **2** | 0.79 | 0.03 | 1.10 | 1.16 | 0.06 |
| **3** | 2.75 | 0.25 | 3.30 | 3.20 | -0.10 |
| **4** | 0.30 | 0.06 | 0.55 | 0.68 | 0.13 |
| **5** | 1.14 | 0.12 | 1.49 | 1.66 | 0.17 |
| **6** | 2.17 | 0.10 | 2.65 | 2.19 | -0.46 |
| **7** | 3.46 | 0.02 | 4.10 | 3.37 | -0.73 |
| **8** | 2.70 | 0.01 | 3.25 | 2.58 | -0.67 |
| **9** | 3.68 | 0.16 | 4.35 | 3.85 | -0.50 |
| **10** | 2.14 | 0.06 | 2.62 | 2.10 | -0.52 |

a. Average of three to five determinations.

b. Standard deviation of log $k'_w$ determinations.

c. Predicted ElogD$_{oct}$ from Equation 1.

d. Data from shake-vial and/or potentiometric determinations. The average was taken if more than one value was available.

e. Average residual- 0.27. ElogD$_{oct}$ vs. logD$_{oct}$ : $R^2$ = 0.969.

References

1. Yalkowski, S. H.; Valvani, S. C. Solubility and Partitioning I: Solubility of Nonelectrolytes in Water. J. Pharm. Sci. **1980,** 69, 912-922

2. Smith, D. A.; Jones, B. C.; Walker, D. K. Design of Drugs Involving the Concepts and Theories of Drug Metabolism and Pharmacokinetics. Med. Res. Rev. **1996,** 16, 243-266

3. Scherrer, R. A.; Howard, S. M. Use of Distribution Coefficients in Quantitative Structure-Activity Relationships. *J. Med. Chem.* **1977**, *20*, 53-58.

4. Smith, D.A. Physicochemical Properties in Drug Metabolism and Pharmacokinetics. In *Computer-Assisted Lead Finding and Optimization,* Ch. 17, van de Waterbeemd, H., Testa, B., Folkers, G., Eds.; VCHA,Weiley-VCH: Weinheim, 1997; pp. 265-276.

5. Yoshida, F.; Topliss, J. G. QSAR Model for Drug Human Bioavailability. *J. Med. Chem.* **2000,** *43*, 2575-2585.

6. Avdeef, A. Assessment of Distribution-pH Profiles. In *Lipophilicity* in Drug Action and Toxicology, Ch. 5, Pliska, V., Testa, B., van de Waterbeemd, H., Eds.; VCH: Weinheim, 1996; pp. 73-87.

7. ACD/LogD Suite, v. 4.5. Advanced Chemistry Development. Toronto, Ontario, Canada.

8. Lipinski, C. A.; Lombardo, F.; Dominy, B.W.; Feeney, P.J. Experimental and computational approaches to estimate solubility and permeability in drug discovery and development. Adv. Drug. Del. Rev. **1997**, 23, 3-25.

9. Sangster, J. *Octanol-Water Partition Coefficients: Fundamentals and Physical Chemistry.* Wiley, New York, 1997; pp. 79-112.

10. van de Waterbeemd, H. M.; Kansy, M.; Wagner, B.; Fischer, [H.] Lipophilicity Measurements by Reversed-Phase High Performance Liquid Chromatography (RP-HPLC). In *Lipophilicity in Drug Action and Toxicology,* Ch. 5, Pliska, V., Testa, B., van de Waterbeemd, H., Eds.; VCH: Weinheim, 1996; pp. 73-87.

11. Pagliara, A.; Khamis, E.; Trinh, A.; Carrupt, P.-A.; Tsai, R.-S.; Testa, B. Structural Properties Governing Retention Mechanisms on RP-HPLC Stationary Phases used for Lipophilicity Measurements. J. *Liq. Chromatogr.* **1995,** *18*,1721-1745

12. Minick, D. J.; Frenz, *J*. H.; Patrick, M. A.; Brent, D. A. A Comprehensive Method for Determining Hydrophobicity Constants by Reversed-Phase High-Performance Liquid Chromatography. *J. Med. Chem.* **1988,** *31*, 1923-1933.

13. Morelock, M.M.; Choi, L.L.; Bell, G.L; Wright, J.L. Estimation and Correlation of Drug Water Solubility with Pharmacological Parameters Required for Biological Activity. J. Pharm. Sci. **1994,** 83, 948-952.

14. Abraham, M.H.; Chadha, H.S; Leo, A.J. Hydrogen Bonding. 35. Relationship between high-performance liquid chromatography capacity factors and water-octanol partition coefficients. J. Chromatogr. A, **1994**, 685, 203-211.

15. Yamagami, C.; Araki, K.; Ohnishi, K.; Hanasato, K.; Inaba, H.; Aono, M.; Ohta, A. Measurement and Prediction of Hydrophobicity Parameters for Highly Lipophilic Compounds: Application of the HPLC Column-Switching Technique to Measurement of logP of Diarylpyrazines. *J. Pharm. Sci.,* **1999,** *88*, 1299-1304.

16. Lombardo, F.; Shalaeva, M. Y.; Tupper, K.A.; Gao, F.; Abraham, M. H. ElogPoct : A Tool for Lipophilicity Determination in Drug Discovery. J. Med. Chem. **2000,** 43, 2922-2928.

17. Minick, D. J.; Brent, D. A.; Frenz, J. Modeling Octanol-Water Partition Coefficients by Reversed-Phase Liquid Chromatography. J. Chromatogr. **1989,** 461, 177-191.

18. Unger, S. H.; Chiang, G. H. Octanol-physiological buffer distribution coefficients of lipophilic amines by reversed-phase high-performance liquid chromatography and their correlation with biological activity. *J. Med. Chem.* **1981,** *24*, 262-270.

19. The LC-ABZ column is considered to be "RP-18 like" and it was described as being electrostatically coated to decrease the solute interactions with free silanols. It is described by the manufacturer as an embedded amide functional group column, and as having some polymeric (cross-linking) character and multiple points of attachment to the silica surface.

20. Melander, W.; Stoveken, J.; Horvath, C. Stationary Phase Effects in Reversed-Phase Chromatography. I. Comparison of Energetics of Retention on Alkyl-Silica Bonded Phases. *J. Chromatogr.* **1980,** *199*, 35-56.

21. Valkó, K.; Bevan, C.; Reynolds, D. Chromatographic Hydrophobicity Index by Fast-Gradient RP-HPLC: A High-Throughput Alternative to logP/logD. *Anal. Chem.* **1997,** *69*, 2022-2029.

22. Camenisch, G.; Alsenz, J.; van de Waterbeemd, H.; Folkers, G. Estimation of permeability by passive diffusion through Caco-2 cell monolayers using the drugs' lipophilicity and molecular weight. *Eur. J. Pharm.Sci.* **1998,** *6*, 313-319.

23. (a) Perlman, M.E.; Zhang, L.; Hu, L.-Y.; Reddy, N.L.; Fischer, J.B.; Durant, G.J. Use of pH dependence of logD for pKa determination and formulation of diarylguanidines. *Pharm. Res.* **1996,** *13*, S-33. (b) Pauletti, G.M.; Perlman, M.E.; Zhang, L.; Borchardt, R.T. *Pharm. Res.* **1997,** *14,* S-24. We thank Dr. Perlman for a copy of both posters.(c) Maillard, M.C.; Perlman, M.E.; Amitay, O.; Baxter, D.; Berlove, D.; Connaughton, S.; Fischer, J.B.; Guo, J.Q.; Hu, L.-Y.; McBurney, R.N.; Nagy, P. I.; Subbarao, K.; Yost, E.A.; Zhang, L.; Durant, G.J. Design, Synthesis, and Pharmacological Evaluation of Conformationally Constrained Analogues of N,N'-Diaryl- and N-Aryl-N-aralkylguanidines as Potent Inhibitors of Neuronal Na+ Channels. *J. Med. Chem.* **1998,** *41,* 3048-3061.

24. Slater, B.; McCormack, A.; Avdeef, A.; Comer, J. E. A. pH-Metric log P. 4. Comparison of Partition Coefficients Determined by HPLC and Potentiometric Methods to Literature Values. J. Pharm. Sci. **1994,** 83, 1280-1283.

25. Barbato, F. ; Caliendo, G.; LaRotonda, M. I. ; Morrica, P. ; Silipo, C. ; Vittoria, A. Relationships between octanol-water partition data, chromatographic indices and their dependence on pH in a set of beta-adrenoceptor blocking agents. *FARMACO* **1990,** *45*, 647-663.

26. Stopher, D.; McClean, S. An improved method for the determination of distribution coefficients. *J. Pharm. Pharmacol.* **1990,** *42*, 144.

27. LaRotonda, M. I.; Amato, G.; Barbato, F.; Silipo, C.; Vittoria, A. Relationship between Octanol-Water partition Data, Chromatographic Indices and their Dependence on pH in a Set of Nonsteroidal Anti-inflammatory Drugs. *Quant. Struct. Act. Relat.* **1983,** *2*, 168-173.

28. Fujita, T.; Iwasa, J.; Hansh, C. A new substituent constant, $\pi$, derived from partition coefficients. *J. Am. Chem.*

*Soc.* **1965,** *86*, 5175-5180.

29. Bundgaard, H.; Falch, E. Allopurinol prodrugs. II. Synthesis, hydrolysis kinetics and physicochemical properties of various N-acyloxylmethyl allopurinol derivatives. *Intern. J. Pharmaceut.* **1985,** *24*, 307-325.

30. Carelli, V.; Di Colo, G. ; Nannipieri, E.; Serafini, M.F. Enhancement effects in the permeation of Alprazolam through hairless mouse skin. *Int. J. Pharm.* **1992,** *88*, 89-97.

31. Sirius Technical Application Notes, 1995, vol.2. Sirius Analytical Instruments, Ltd., Forest Row, East Sussex RH18 5DW.

32. Barbato, F. ; LaRotonda, M. I. ; Quaglia, F. Chromatographic indices determined on an immobilized artificial membrane (IAM) column as descriptors of lipophilic and polar interactions of 4-phenyldihydropyridine calcium-channel blockers with biomembranes. *Eur. J. Med. Chem.* **1996,** *31*, 311-318.

33. Okada, J.; Esaki, T.; Fujieda K. $^{13}$C nuclear magnetic resonance spectra of antipyrine derivatives and their application to Hansch analysis. *Chem. Pharm. Bull.* 1976, *24*, 61-71.

34. Lüllmann, H.; Wehling, M. The binding of the drugs to different polar lipids *in vitro. Biochem. Pharmacol.* **1979,** *28*, 3409-3415.

35. Hansch, C.; Leo, A.; Hoekman, D. *Exploring QSAR. Hydrophobic, Electronic, and Steric Constants.* American Chemical Society: Washington, DC; 1995; pp. 3-216.

36. Lacko, L.; Wittke, B. The affinities of benzodiazepines to the transport protein of glucose in human erythrocytes. *Arzneim.-Forsch.* **1984,** *34*, 403-407.

37. Muller, W.; Wollert, U. Interaction of Benzodiazepines with Human Serum Albumin. Circular Dichroism Study. *Arch. Pharmacol.* **1973,** *278*, 301-312.

38. Taylor, P. J. Hydrophobic Properties of Drugs In Comprehensive Medicinal Chemistry, Hansch, C., Sammes, P.G., Taylor, J. B. Eds.; Pergamon Press: Oxford,1990; vol. 5, pp 241-294

39. Henczi, M.; Nagy, J.; Weaver, D.F. Determination of octanol-water partition coefficients by an HPLC method for anticonvulsant structure-activity studies. *J. Pharm. Pharmacol.* **1995,** 47, 345-347.

40. Ter Laak, A. M. ; Tsai, R. S. ; Donné-Op den Kelder, G. M. ; Carrupt, P.-A. ; Testa, B.; Timmerman, H. Lipophilicity and hydrogen-bonding capacity of H$_1$-antihistaminic agents in relation to their central sedative side-effects. *Eur. J. Pharm. Sci.* **1994,** *2*, 373-384.

41. Sirius Technical Application Notes, 1994, vol.1. Sirius Analytical Instruments, Ltd., Forest Row, East Sussex RH18 5DW.

42. Berthod, A. ; Carda-Broch, S. ; Garcia-Alvarez-Coque, M. C. Hydrophobicity of ionizable compounds. A theoretical study and measurements of diuretic octanol-water partition coefficients by countercurrent chromatography. *Anal. Chem.* **1999,** *71,* 879-888.

43. Timmermans, P. B. M. W. M. ; Brands, A. ; Van Zwieten, P. A. Lipophilicity and brain disposition of clonidine and structurally related imidazolidines. *Naunyn-Schmiedeberg's Arch. Pharmacol.* **1977,** *300,* 217-226.

44. Carmichael, F. J. ; Israel, Y. In vitro inhibitory effects of narcotic analgesics and other psychotropic drugs on the active uptake of norepinephrine in mouse brain tissue. *J. Pharmacol. Exp. Ther.* **1973,** *186*, 253-260.

45. Kaufman, J. J.; Semo, N. M.; Koski, W. S. Microelectrometric titration measurement of the pK$_a$'s and partition and drug distribution coefficients of narcotic antagonists and their pH and temperature dependence. *J. Med. Chem.* **1975,** *18,* 647-655.

46. Winiwarter, S. ; Bonham, N. M. ; Ax, F.; Hallberg, A. ; Lennernäs, H.; Karlén, A. Correlation of human jejunal permeability (*in vivo*) of drugs with experimentally and theoretically derived parameters. A multivariate data analysis approach. *J. Med. Chem.* **1998,** *41*, 4939-4949.

47. Tomida, H.; Yotsuynagi, T.; Ikeda, K. Solubilization of steroid hormones by polyoxyethylene lauryl ether. *Chem. Pharm. Bull.* **1978,** *26*, 2832-2837.

48. Seiler, P.; Zimmermann, I. 5-phenyl-1,3-dihydro-1,4-benzodiazepin-2-ones. *Arzneim.-Forsch.* **1983,** 33, 1519-1522.

49. Meuldermans, W. E. G. ; Hurkmans, R. M. A. ; Heykants, J. J. P. Plasma protein binding and distribution of fentanyl, sulfentanil, alfentanil and lofentanil in blood. *Arch. Int. Pharmacodyn.* **1982,** *257*, 4-19.

50. Alessi-Severini, S.; Coutts, R. T.; Jamali, F.; Pasutto, F. M. Flecainide. In *Analytical profiles* of *drug substances and excipients;* Brittain, H. G., Ed.; Academic Press, Inc.: San Diego, 1992, Vol. 21, pp 169-195.

51. Jezequel, S.G. Fluconazole: interspecies scaling and allometric relationships of pharmacokinetic properties. *J.Pharm.Pharmacol.* **1994,** *46*, 196-199.

52. Graf, E.; El-Menshawy, M. pK- and Vk-messungen an benzodiazepinen. *Pharm. Uns. Zeit.* **1977,** *6*, 171-178.

53. Schutz, V.H.; Fitz, H. Screening, detection and biotransformation of Lormetazepam, a new hypnotic agent from the 1,4-benzodiazepine series. *Arzneim.-Forsch.* **1982,** *32*, 177-183.

54. Anderson, R.F.; Patel, K.B. Effect of lipophilicity of nitroamidazoles on radiosensitization of hypoxic bacterial cells *in vitro. Br. J. Cancer* **1979,** *39*, 705-710.

55. Adams, G.E.; Clarke, E.D.; Flockhart, I.R.; Jacobs, R. S; Sehmi, D. S.; Stratford, I. J.; Wardman, P.; Watts, M.

E. Structure-activity relationships in the development of hypoxic cell radiosensitizers. I. Sensitization efficiency. *Int. J. Radiat. Biol.* **1979**, 35, 2, 133-150.

56. Wozniak, T. J. Nizatidine. In *Analytical profiles of drug substances and excipients;* Florey, K. Ed.; Academic Press, Inc.: San Diego, 1990, Vol. 19, pp 169-195.

57. Ungell, A.-L. ; Nylander, S.; Bergstrand, S. ; Sjöberg, Å. ; Lennernäs, H. Membrane transport of drugs in different regions of intestinal tract of the rat. *J. Pharm. Sci.* **1998**, *87*, 360-366.

58. Mohler, V.W.; Soder, A. On chemistry and synthesis of 3,7-dimethyl-1-(5-oxo-hexyl)-xanthine. *Arzneim.-Forsch.* **1971**, *21*, 1159-1160.

59. Büchi, V. J.; Oey, L. T.; Perlia, X. Zusammenhänge zwischen der chemischen Konstitution, den physikalisch-chemischen Eigenschaften, der chemischen Reaktivität und der lokalanästhetischen Wirksamkeit einiger Procain-Isostere. *Arzneim.-Forsch.* **1972**, *22*, 1071-1084.

60. Manners, C. N. ; Payling, D. W. ; Smith, D, A. Lipophilicity of zwitterionic sulphate conjugates of tiaramide, propranolol and 4'-hydroxypropranolol. *Xenobiotica,* **1989,** *19*, 1387-1397.

61. Tsai, R.-S.; Carrupt, P.-A.; Testa, B.; Tayar, N.E.; Grunewald, G.L.; Casy, A. F. Influence of Stereochemical Factors on the Partition Coefficient of Diastereomers in a Biphasic Octan-1-ol/water System. *J. Chem. Res. (M)*, **1993**, 1901-1920.

62. Iwasa, J.; Fujita, T.; Hansch, C. Substituent constants for aliphatic functions obtained from partition coefficients. *J. Med. Chem.* **1965**, *8*, 150-153.

63. O'Connor, D.O.; Capel, C.; Rycroft, W.; Tattersall, F.D.; Locker, K., Sohal, B.; Graham, M.I.; Evans, D.C. Influence of the Physicochemistry on the Brain Penetration of the 'Triptans in Rat. Poster presented at the XIV Course in Drug Research, June 5-6, **1997,** Helsinki, Finland.

64. Artursson, P.; Karlsson, J. Correlation between Oral Drug Absorption in Humans and Apparent Drug permeability Coefficients in Human Intestinal Epithelial (CACO-2) Cells. *Biochem. Biophys. Res. Comm.* **1991**, *175*, 880-885.

65. Hansch, C.; Nakamoto, K.; Gorin, M.; Denisevich, P; Garrett, E. R.; Heman-Ackah, S. M.; Won, C. H. Structure-activity relationship of chloramphenicols. *J. Med. Chem.* **1973**, *16*, 917-922.

66. Barbato, F.; Recanatini, M.; Silipo C.; Vittoria, A.; Hydrophobic constants and quantitative structure activity relationships (QSAR) in sets of phenothiazine drugs. *Eur. J. Med. Chem.* **1982**, *17,* 229-234.

67. Priewer, H.; Ullrich, F.; Herzfeldt, C.D.; Kleinsorge, D.; Mutschler, E. Solubility and distribution coefficients of potassium and magnesium retaining triamterene derivatives. *Pharmazie* **1996,** *51,* 279-282.

**Claims**

1. A method of determining $ElogD_{oct}$ for chemical compounds which comprises:

   a. Introducing said chemical compounds seriatim to the column of a reverse phase high performance liquid chromatograph; said column being an embedded amide functional group column; or a C-18 bonded column with low silanol activity; and

   b. Eluting said compounds with a mobile phase containing MOPS buffer and a methanol/octanol mixture in which the proportions of said methanol/octanol mixture to said buffer are from 75 to 15% v/v; and with flow rates between 0.5 and 3 ml/min and

   c. Measuring the retention time required to elute each sample from said column; and

   d. Calculating $ElogD_{oct}$ from the retention time of each sample using equation 1:

$$logD_{oct} = 1.1245\ (\pm\ 0.0233)\ log\ k'_{w} + 0.2121\ (\pm\ 0.0429) \qquad\qquad (Eq.1).$$

2. The method of claim 1 wherein said compounds for which $ElogD_{oct}$ is to be determined are divided into groups according to calculated lipophilicity based on chemical structure and; $ElogD_{oct}$ is determined for all samples in a first group and; said column is equilibrated to the conditions for a second group.

3. The method of claim 1 wherein each of steps a) through d) is performed by robotic means under the control of a programmed computer.

4. The method of claim 1 wherein said column is an embedded amide functional group column.

**5.** The method of claim 1 wherein said column is a C-18 bonded column with low silanol activity.

**6.** The method of claim 1 wherein the buffer pH is between 4 and 8.

# FIG. 1

# FIG. 2